# DEMANDE DE BREVET EUROPEEN

(11) **EP 0 789 439 A1**
(43) Date de publication de la demande: **13.08.1997**
(21) Numéro de dépôt: 97400264.4
(22) Date de dépôt: 06.02.1997
(51) Int. Cl.: H02J 7/14

(54) **Dispositif régulateur de la tension de charge d'une batterie par un alternateur, en fonction d'une tension de référence et de la vitesse de rotation de l'alternateur**

(30) Priorité: 08.02.1996 FR 9601544
(71) Demandeur: VALEO EQUIPEMENTS ELECTRIQUES MOTEUR, 94000 Créteil (FR)
(72) Inventeur: Pierret, Jean-Marie, 75012 Paris (FR); Canitrot, Didier, 77340 Pontault Combault (FR); Brandy, Frédéric, 94270 Le Kremlin Bicêtre (FR); Ly, Sokha, 75013 Paris (FR)
(74) Mandataire: Le Forestier, Eric

(57) **Abrégé**

Un dispositif régulateur de la tension de charge d'une batterie par un alternateur, notamment dans un véhicule automobile, comprend des premiers moyens comparateurs (RFP) pour comparer la tension de batterie (UB+) à une tension de régulation (S1), et des moyens (M1, F1) pour engendrer un signal (VP1) représentatif de la vitesse de rotation de l'alternateur et des seconds moyens comparateurs (COMP) pour comparer ledit signal avec un signal variable de référence (VP2).

Selon l'invention :
- les premiers moyens comparateurs (RFP) sont aptes à supprimer l'excitation de l'alternateur lorsque la tension de batterie (UB+) est supérieure à ladite tension de régulation (S1), et
- les seconds moyens comparateurs (COMP) sont aptes à sélectivement établir et supprimer l'excitation de l'alternateur en fonction de la comparaison entre ledit signal (VPl) représentatif de la vitesse de rotation et ledit signal variable de référence (VP2) lorsque la tension de batterie est inférieure à ladite tension de régulation.

## Description

La présente invention a trait d'une façon générale aux dispositifs régulateurs de la tension de charge d'une batterie par un alternateur dans un véhicule automobile.

Elle concerne plus particulièrement un nouveau dispositif régulateur destiné à assurer une régulation satisfaisante en association avec des moteurs à combustion présentant, à des régimes de rotation faibles, un acyclisme important, c'est-à-dire de fortes variations de la vitesse de rotation du moteur.

On connaît par FR-A-2 691 020 au nom de la Demanderesse un dispositif de régulation destiné, lors de la mise en service de consommateurs de courant important, à éviter que le couple résistant présenté au moteur thermique par l'alternateur ne vienne réduire encore un régime de rotation déjà bas et risque de faire hoqueter ou caler le moteur.

A cet effet, le dispositif de régulation selon ce document prévoit de contrôler l'excitation de l'alternateur non plus en fonction du courant demandé par les consommateurs, mais en fonction d'une loi de diminution admissible de la vitesse de rotation du moteur ou de l'alternateur.

Cette solution s'avère tout à fait satisfaisante pour des moteurs thermiques présentant un régime de rotation au ralenti relativement stable.

L'acyclisme du régime de rotation au ralenti des moteurs thermiques est cependant un phénomène que l'on rencontre de plus en plus souvent dans les moteurs thermiques modernes. Plus précisément, afin notamment de diminuer la pollution et la consommation de carburant, on tend aujourd'hui à donner aux moteurs un régime de ralenti extrêmement réduit, avec lequel les compressions et les injections de carburant successives au niveau des cylindres provoquent des variations importantes de la vitesse de rotation du moteur au ralenti, et ces variations perturbent le fonctionnement du dispositif de régulation du document précité.

Plus précisément, dans ce dispositif de régulation connu, pour un débit donné de l'alternateur défini par les charges électriques en service, un accroissement de la vitesse de rotation provoque une diminution du rapport cyclique de la commande d'excitation, tandis qu'une diminution de la vitesse de rotation provoque au contraire un accroissement de ce rapport cyclique. Ces fortes variations de rapport cyclique peuvent en particulier amener le régulateur dans un état de fonctionnement plein champ, ce qui est détecté par le dispositif régulateur pour entrer accidentellement dans le mode de régulation en fonction de la vitesse et non plus en fonction de la tension de sortie de l'alternateur, alors qu'aucune nouvelle charge n'a été mise en service.

En outre, dans le régulateur connu, la loi de diminution autorisée de la vitesse (ou d'accroissement autorisé de la période, signal VP2 sur la figure 1 de FR-A-2 691 020) est établie à partir d'une valeur de période réelle prise à la volée à partir d'un signal de phase de l'alternateur. Cette valeur de période réelle variant dans de grandes proportions du fait de l'acyclisme, il est très probable que la loi précitée présentera un point de départ incorrect, à savoir soit une période trop faible, soit une période trop élevée.

Dans le premier cas, il en résulte une suppression de l'excitation pendant une durée prolongée, et une sous-alimentation indésirable des charges. Dans le second cas, il en résulte au contraire une reprise hâtive de l'excitation, et une diminution indésirable du régime de ralenti.

Ainsi la régulation conforme à l'antériorité ne peut fonctionner correctement en présence d'acyclisme.

Au surplus, le faible régime de ralenti du moteur et son acyclisme amènent la régulation à s'effectuer à fréquence particulièrement basse et de façon instable, ce qui se traduit par de fortes variations de débit en sortie d'alternateur. Ces variations sont désavantageuses en ce qu'elles diminuent la durée de vie de la batterie qui doit les supporter.

La présente invention vise à pallier ces inconvénients de la technique connue, et à proposer un nouveau dispositif de régulation qui s'affranchisse des problèmes liés à l'acyclisme au ralenti du moteur à combustion associé.

Ainsi la présente invention propose un dispositif régulateur de la tension de charge d'une batterie par un alternateur, notamment dans un véhicule automobile, du type comprenant :
- des premiers moyens comparateurs pour comparer la tension aux bornes de la batterie à une tension de régulation, et
- des moyens pour engendrer un signal représentatif de la vitesse de rotation de l'alternateur et des seconds moyens comparateurs pour comparer ledit signal avec un signal variable de référence, dispositif caractérisé en ce que :
- les premiers moyens comparateurs sont aptes à supprimer l'excitation de l'alternateur lorsque la tension aux bornes de la batterie est supérieure à ladite tension de régulation, et
- les seconds moyens comparateurs sont aptes à sélectivement établir et supprimer l'excitation de l'alternateur en fonction de la comparaison entre ledit signal représentatif de la vitesse de rotation et ledit signal variable de référence lorsque la tension aux bornes de la batterie est inférieure à ladite tension de régulation.

Des aspects préférés, mais non limitatifs, du dispositif selon l'invention sont les suivants :
- le dispositif comprend des moyens pour établir ledit signal variable de référence en fonction du résultat de la comparaison par les premiers moyens comparateurs.
- ledit signal variable de référence est un signal représentatif d'une valeur de référence de période de rotation de l'alternateur, et les moyens pour établir ledit signal de référence de période comprennent des moyens pour engendrer un signal qui décroît si la tension aux bornes de la batterie est supérieure à ladite tension de régulation et qui croît si la tension aux bornes de la batterie est inférieure à ladite tension de régulation.
- la vitesse de croissance dudit signal de référence de période est plus faible que sa vitesse de décroissance.
- ledit signal représentatif de la vitesse de rotation de l'alternateur est obtenu à partir d'un signal en dents de scie, la largeur desdites dents étant proportionnelle à la période de rotation de l'alternateur, et le dispositif comprend en outre un premier moyen de filtrage du signal en dents de scie avec un taux de filtrage tel qu'il y subsiste une composante alternative, la comparaison du signal filtré avec ledit signal variable de référence provoquant un hachage à fréquence élevée du signal d'excitation de l'alternateur.
- le dispositif comprend en outre un premier moyen de temporisation prévu en aval des seconds moyens comparateurs, destinés à limiter la fréquence dudit signal d'excitation.
- le dispositif comprend en outre des troisièmes moyens comparateurs destinés à comparer un signal de phase pris sur un bobinage de stator de l'alternateur avec une tension de référence et à forcer l'excitation de l'alternateur à s'établir prioritairement lorsque ledit signal de phase est inférieur à ladite tension de référence.
- le dispositif comprend en outre des moyens pour limiter la valeur dudit signal variable de référence à une valeur n'excédant pas la valeur de crête dudit signal filtré.
- lesdits moyens de limitation comprennent un second moyen de temporisation prévu entre les seconds moyens comparateurs et des moyens pour établir ledit signal variable de référence.
- le second moyen de temporisation est apte à appliquer auxdits moyens d'établissement du signal de référence de période un signal qui bloque la croissance de ce signal.
- le dispositif comprend en outre des quatrièmes moyens comparateurs pour comparer la vitesse de rotation de l'alternateur à une vitesse limite et pour au moins atténuer la fonction des seconds moyens comparateurs lorsque ladite vitesse limite est dépassée.
- les quatrièmes moyens comparateurs reçoivent ledit signal filtré et délivrent un signal de sortie à des moyens pour établir ledit signal variable de référence de manière à modifier l'évolution de celui-ci.
- ledit signal de sortie des quatrièmes moyens comparateurs provoque une augmentation de la vitesse de croissance du signal de référence de période.
- le dispositif comprend en outre des cinquièmes moyens comparateurs recevant en entrée des signaux de phase pris sur des bobinages de stator de l'alternateur, pour détecter l'entrée en rotation de l'alternateur lorsque l'amplitude d'un signal combinant ces signaux de phase dépasse une valeur de seuil donnée.
- il est prévu en association avec les cinquièmes moyens comparateurs un second moyen de filtrage.
- lesdits cinquièmes moyens comparateurs sont utilisés pour établir un signal à partir duquel ledit signal représentatif de la vitesse de rotation de l'alternateur est établi.
- le dispositif comprend en outre des sixièmes moyens comparateurs pour comparer ledit signal représentatif de la vitesse de rotation de l'alternateur avec une valeur de seuil, de manière à retarder l'excitation de l'alternateur jusqu'à l'instant auquel une vitesse d'amorçage de l'alternateur a été atteinte.
- les sixièmes moyens comparateurs engendrent un signal de sortie apte à interdire la croissance du signal de référence de période avant que la vitesse d'amorçage n'ait été atteinte.
- les sixièmes moyens comparateurs appliquent un signal auxdits troisièmes moyens comparateurs pour neutraliser l'action de ces derniers aussi longtemps que la vitesse d'amorçage n'a pas été atteinte.
- le dispositif comprend en outre des septièmes moyens comparateurs destinés à comparer la tension aux bornes de la batterie avec une valeur de sécurité et à assurer une excitation prioritaire de l'alternateur dès que ladite tension aux bornes de la batterie devient inférieure à ladite valeur de sécurité, à la condition que la vitesse de rotation de l'alternateur soit supérieure à sa vitesse d'amorçage.

D'autres aspects, buts et avantages de la présente invention apparaîtront mieux à la lecture de la description détaillée suivante d'une forme de réalisation préférée de celle-ci, donnée à titre d'exemple et faite en référence aux dessins annexés, sur lesquels :
la figure 1 est un schéma-bloc d'une première forme de réalisation d'un dispositif régulateur de l'invention,
la figure 2 est un chronogramme illustrant l'évolution dans le temps de certains signaux du dispositif de la figure 1,
la figure 3 est un schéma détaillé d'un circuit réalisé conformément à l'architecture de la figure 1,
la figure 4 est un schéma-bloc d'une première variante de réalisation du dispositif régulateur,
la figure 5 est un schéma détaillé d'un circuit correspondant à cette première variante de réalisation,
la figure 6 est un schéma-bloc d'une deuxième variante de réalisation du dispositif régulateur,
la figure 7 est un schéma détaillé de deux blocs du schéma-bloc de la figure 6,
la figure 8 est un chronogramme illustrant l'évolution dans le temps de certains signaux des circuits de la figure 7,
la figure 9 est un schéma-bloc d'une troisième variante de réalisation du dispositif régulateur,
la figure 10 est un schéma détaillé de l'un des blocs du schéma-bloc de la figure 9, et
la figure 11 est un schéma détaillé d'un circuit correspondant au dispositif de la figure 9.

On notera préliminairement que, d'une figure à l'autre, des éléments ou parties identiques ou similaires ont été désignés dans la mesure du possible par les mêmes signes de référence, et ne sont pas décrits à nouveau à chaque fois.

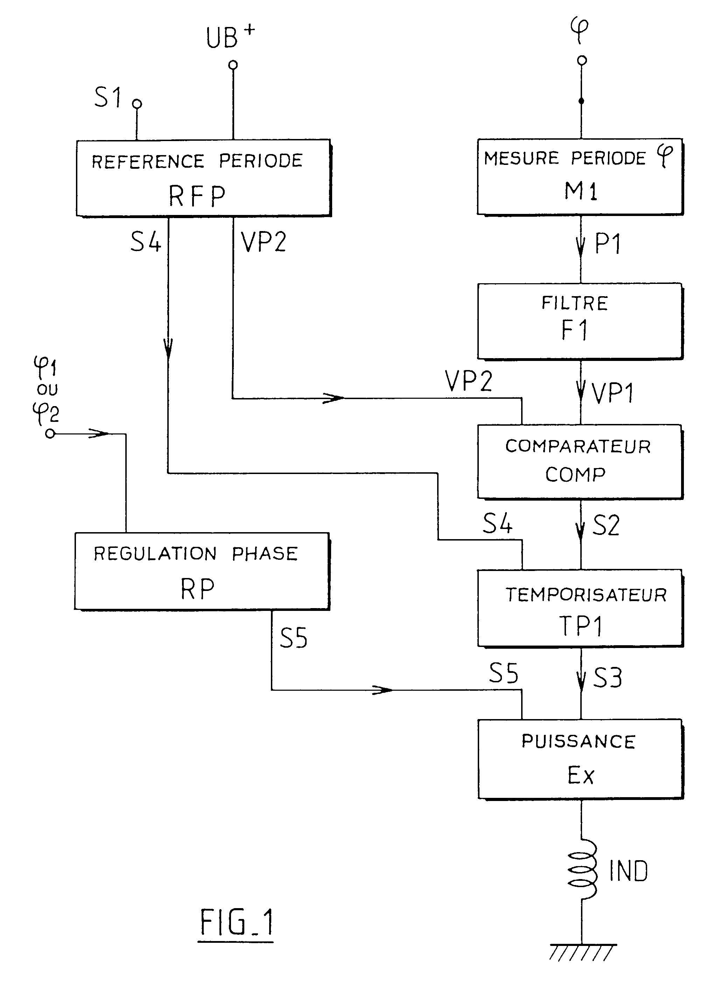

En référence tout d'abord à la figure 1, on a représenté un schéma-bloc d'un circuit de régulation de la tension de charge d'une batterie par un alternateur selon l'invention.

Il comprend un bloc M1 destiné à mesurer la période instantanée de la rotation de l'alternateur, à partir d'un signal ϕ obtenu lui-même à partir de signaux de phase pris sur les bobinages de stator de l'alternateur. Ce bloc délivre un signal analogique P1 représentatif de la valeur de cette période.

On observera ici que le signal ϕ est de préférence non pas une simple différence de potentiel prise directement sur les bobinages de stator de l'alternateur, mais est constitué d'un signal rectangulaire propre dont la période est proportionnelle à la période de rotation de l'alternateur. On décrira plus loin une forme de réalisation d'un circuit capable d'élaborer le signal ϕ en fonction de potentiels de phase ϕ1 et ϕ2 pris sur les bobinages de stator.

Le signal P1 est appliqué à l'entrée d'un bloc F1 qui a pour rôle de filtrer le signal P1 pour obtenir une valeur moyenne de la période de rotation, notée VP1.

Le circuit comporte en outre un bloc désigné par RFP, qui a pour objet d'engendrer un signal de référence de période, noté VP2. Ce signal, comme on le verra plus loin, est élaboré en fonction de la valeur de la tension de batterie UB+ prise sur la sortie de l'alternateur ou sur la batterie elle-même, par rapport à une tension de référence fixe, et ceci dans une gamme de fonctionnement déterminée. A cet effet, ce bloc RFP reçoit sur une entrée un signal S1 constituant ladite tension de référence, à laquelle est comparée la tension UB+ ou une fraction prédéterminée de cette tension obtenue à l'aide d'un pont diviseur résistif.

Le bloc COMP constitue un comparateur analogique qui reçoit sur une première entrée de comparaison le signal de période moyenne VP1 et sur une seconde entrée de comparaison le signal de référence de période VP2, et qui délivre en sortie un signal logique S2 à partir duquel, comme on va le voir, le signal de commande d'excitation de l'alternateur va être élaboré.

On observera ici que le filtrage réalisé par le bloc F1 présente avantageusement un taux de filtrage tel que son signal de sortie VP1 conserve une composante alternative substantielle, tandis que le signal VP2 évolue de façon beaucoup plus lente, pratiquement sans composante alternative.

De la sorte, la comparaison entre les signaux VP1 et VP2 permet de fournir un signal de sortie S2 haché à une fréquence relativement élevée, en synchronisme avec le signal de phase délivré par l'alternateur.

Dans le cas où l'alternateur tourne à une vitesse élevée, par exemple de 15000 tours/minute, la fréquence du signal S2 est typiquement de 1500 Hz. Cette valeur peut s'avérer trop importante et provoquer dans l'organe de commutation de puissance de l'enroulement d'excitation des pertes par commutation importantes. Aussi prévoit-on en outre dans cette forme de réalisation un circuit TP1 qui constitue une temporisation destinée à prolonger la durée du signal S2 dans une telle situation, afin de limiter les pertes par commutation.

Par exemple, en donnant à la temporisation réalisée par TP1 une valeur de 2 ms, on limite la fréquence du signal d'excitation à une valeur de 500 Hz, tout à fait acceptable.

Le signal de sortie S3 du circuit TP1 est appliqué à l'entrée d'un étage de puissance (bloc EX) qui alimente l'enroulement d'excitation IND de l'alternateur par exemple à partir de la tension de batterie.

Le bloc RFP décrit plus haut fonctionne de la façon suivante :
- il assure une première fonction de régulation sur tension, qui permet de supprimer l'excitation en toutes circonstances dès que la tension UB+ dépasse la tension de référence fixée par la valeur de S1, et notée Ureg; ceci constitue une partie de la fonction classique de régulation sur tension. Dans cette situation, le bloc RFP applique au bloc TP1 un signal S4 de manière à assurer via ledit bloc TP1 la coupure de l'excitation.
- en revanche, lorsque la tension batterie UB+ est inférieure à la limite Ureg, l'excitation n'est pas rétablie comme dans le cas d'une régulation classique sur tension, mais la régulation s'effectue alors par comparaison entre les signaux VP1 et VP2. A cet effet, le bloc RFP élabore en permanence le signal de référence de période VP2 selon les critères suivants :
   . si UB+ est supérieure à Ureg, alors le bloc RFP provoque une diminution de la valeur du signal VP2 (bien que, dans cette situation, le signal VP2 n'intervienne pas directement dans la régulation);
   . si au contraire UB+ est inférieure à Ureg, alors le bloc RFP provoque un accroissement, plus lent que la diminution précitée, de la valeur du signal VP2.

Le circuit de la figure 1 comporte en outre un bloc de régulation sur phase, noté RP, destiné à provoquer un accroissement prioritaire de l'excitation lorsque l'amplitude d'un signal de phase ϕ1 ou ϕ2 pris sur un enroulement de stator de l'alternateur devient inférieure à une limite prédéterminée, afin d'accroître cette amplitude. De cette manière, on garantit que l'établissement du signal ϕ (obtenu à partir de ϕ1 et ϕ2) et la mesure de sa période par le bloc M1 ne soient jamais perturbés par une amplitude excessivement faible des signaux de phase. Cet accroissement prioritaire de l'excitation est réalisé par le signal S5 de sortie du bloc RP, qui attaque directement le circuit de puissance EX.

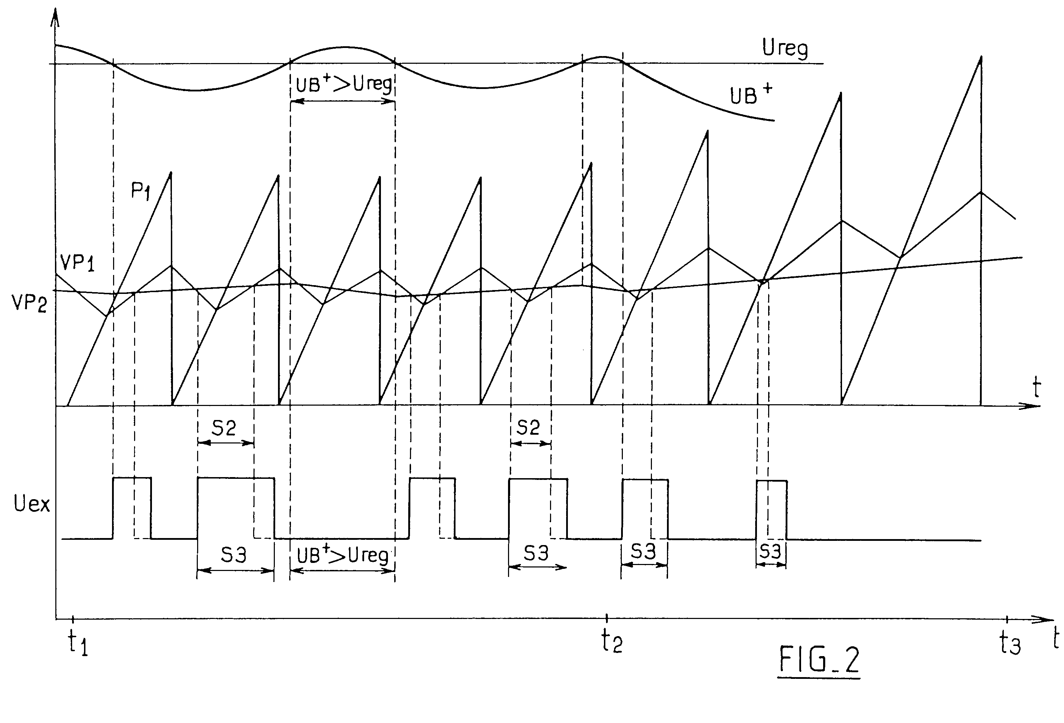

On va maintenant décrire, en référence aux figures 1 et 2, le comportement du circuit de la figure 1 dans différentes circonstances.

Tout d'abord, lorsque la tension à réguler UB+ est supérieure à la tension de régulation Ureg fixée par la valeur de S1, alors l'excitation est coupée, comme dans le cas d'une régulation classique sur tension. Ainsi, dans ce cas, c'est le signal S4 délivré par le bloc RFP qui est prioritaire à l'entrée du bloc de temporisation TP1.

Lorsque la tension UB+ devient inférieure à Ureg, alors une excitation est effectuée seulement si la valeur du signal VP1 délivré par le filtre F1, représentative de la valeur de la période du signal de phase, est inférieure à la valeur du signal de référence VP2 délivré par le bloc RFP, cette condition étant établie par le bloc comparateur COMP.

On va démontrer ci-dessous que la loi d'évolution du signal VP2, telle qu'expliquée plus haut, est telle que lorsque la vitesse de rotation de l'alternateur est constante, il se produit une convergence de la valeur de VP2 vers la valeur de VP1, et une régulation de la tension UB+ autour de Ureg. A cet égard, on peut considérer trois cas :
(1) si UB+ est supérieure à Ureg, alors, l'excitation étant supprimée, UB+ finit par diminuer; en outre, le signal VP2 décroît pendant toute cette phase;
(2) si UB+ est inférieure à Ureg et si VP2 est inférieur à VP1, alors l'excitation est ici encore supprimée, et UB+ diminue encore; en outre, le signal VP2 croît;
(3) enfin si UB+ est inférieure à Ureg et si VP2 est supérieur à VP1, alors l'excitation est rétablie, et UB+ finit par augmenter; en outre, le signal VP2 croît toujours.

Ainsi, dans la situation (2), l'excitation est retardée par le fait que VP2 est inférieur à VP1, bien que la tension UB+ soit trop basse. Toutefois, VP2 s'accroît pendant toute cette phase et finit par devenir supérieur à VP1, et l'on se retrouve dans la situation (3), dans laquelle une excitation se produit et UB+ augmente. On aboutit alors à la situation (1), dans laquelle l'excitation est supprimée et VP2 décroît à nouveau.

Ainsi VP2 tend à converger vers VP1 et, lorsque les deux valeurs sont proches l'une de l'autre, le dispositif se comporte pratiquement comme un régulateur sur tension classique.

Cette phase de fonctionnement est illustrée entre les instants t1 et t2 sur la figure 2.

Comme on l'a indiqué plus haut, le signal VP1 peut, par le jeu d'un taux de filtrage limité, présenter une composante alternative résiduelle importante, comme illustré sur la figure 2. Dans ce cas, on réalise un découpage du signal d'excitation S2 appliqué à l'entrée du bloc TP1, avec dans ce signal des fronts montants ou descendants à chaque fois que le signal VP1 franchit le signal VP2 vers le bas et vers le haut, respectivement. Ceci n'empêche pas, comme on l'a vu plus haut, de voir la valeur de VP2 converger vers la valeur moyenne de VP1.

Ce filtrage limité et le découpage correspondant permettent avantageusement d'assurer une commande de l'excitation à fréquence élevée, ce qui évite les problèmes d'instabilité de régulation. En même temps, la temporisation TP1 permet d'éviter que cette fréquence ne s'accroisse excessivement et induise des pertes importantes par commutation dans le bloc EX.

On va maintenant décrire le fonctionnement du dispositif dans le cas où la vitesse de rotation du moteur thermique, et donc de l'alternateur, augmentent.

Dans ce cas, la valeur moyenne du signal de période VP1 diminue plus rapidement que le signal de référence VP2. La comparaison effectuée entre VP1 et VP2 lorsque UB+ est inférieure à Ureg tend donc à accroître l'excitation de l'alternateur, car les durées pendant lesquelles VP1 se situe au-dessous de VP2 deviennent plus longues.

Et dès que la tension UB+ devient de ce fait supérieure à Ureg, le bloc RFP et le signal S4 interviennent pour couper l'excitation. On réalise donc dans ce cas une régulation sensiblement identique à une régulation sur tension, pour maintenir en permanence la valeur de UB+ proche de Ureg.

Dans le cas où la vitesse de rotation du moteur et de l'alternateur diminue, alors au contraire la valeur moyenne de VP1 s'accroît plus rapidement que la valeur de VP2. Cette situation est illustrée dans la partie droite de la figure 2, entre les instants t2 et t3. La comparaison entre VP1 et VP2 tend à faire diminuer l'excitation, ce qui correspond au fait que les créneaux découpés du signal S3 deviennent de plus en plus courts, et la tension UB+ baisse donc.

Ainsi, lorsqu'une baisse de régime se produit alors que le moteur tourne déjà au ralenti, on soulage celui-ci en diminuant rapidement mais progressivement l'excitation et donc le débit de l'alternateur, pour diminuer son couple résistant et atténuer de façon contrôlée la baisse de régime.

On comprend ici que la baisse de régime autorisée sans limiter le débit de l'alternateur est déterminée par la pente de croissance du signal VP2. Ainsi, lorsque la baisse de régime est provoquée par la mise en service dans le réseau de bord d'une charge forte consommatrice de courant, l'alimentation des charges restera correcte si cette baisse de régime n'excède pas la valeur imposée par la pente de VP2.

On réalise donc dans ce cas une régulation sur la vitese de rotation de l'alternateur.

Dans le cas de variations brutales de régime :
- en cas d'augmentation brutale, on réalise une régulation analogue à une régulation sur tension ordinaire;
- en cas de diminution brutale, l'excitation est rapidement complètement coupée jusqu'à ce que le signal VP2 rejoigne la valeur moyenne de VP1 au niveau auquel celle-ci s'est stabilisée.

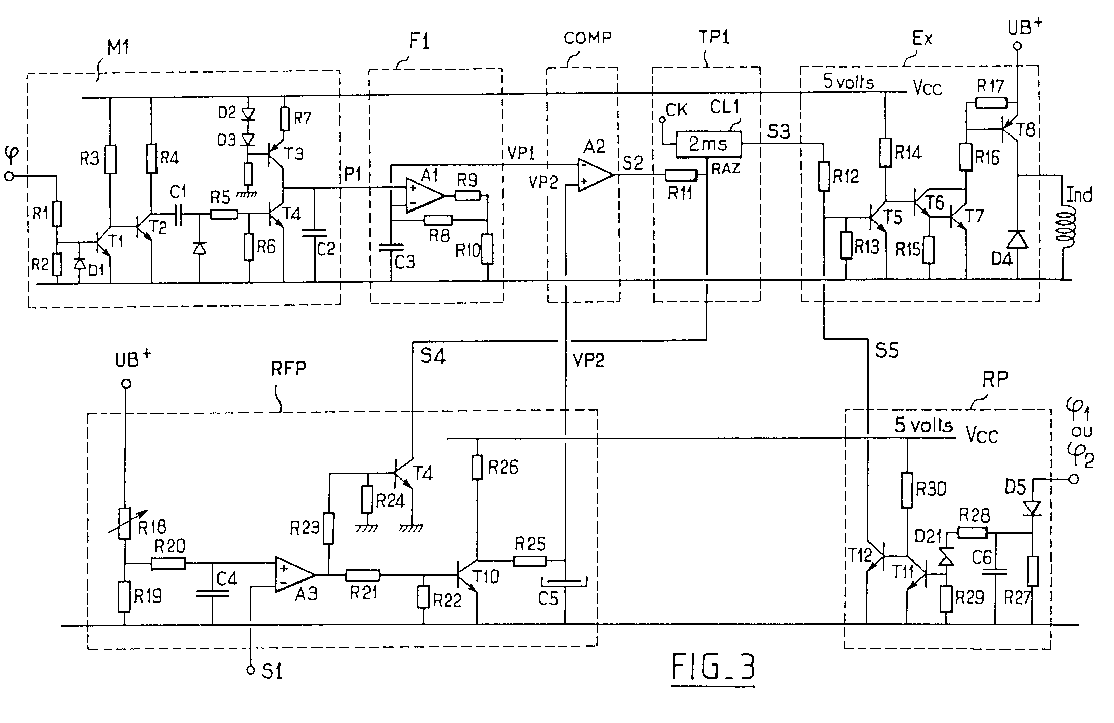

Maintenant en référence à la figure 3, on va décrire une forme de réalisation concrète du dispositif régulateur de la figure 1, réalisé en technologie analogique.

Par souci de légèreté, on ne décrira pas l'ensemble des divers composants et de leur cablâge, la référence à la figure étant à cet égard suffisante, mais l'on décrira les composants essentiels et leur comportement.

Le bloc de mesure de période M1 est construit autour des étages à transistors T1, T2, T3 et T4. Le condensateur C2 est chargé par une source de courant constant constituée par T3 et R7, puis déchargé brutalement par T4 à chaque fois que ce transistor est rendu passant par un front positif du signal de phase transmis via T1, T2 et C1. On produit donc en sortie un signal de phase P1 en dents de scie (voir figure 2), chaque crête étant d'autant plus haute que la période du signal de phase est longue.

La fonction de filtrage réalisée par le bloc F1 est construite autour de l'amplificateur opérationnel A1, la charge du condensateur C3 dépendant de la comparaison entre le signal de sortie VP1 et le signal d'entrée P1 réalisée par ledit amplificateur opérationnel.

On obtient donc en sortie un signal VP1 filtré mais conservant, par un choix approprié des valeurs de C3 et des résistances associées, une composante alternative comme illustré sur la figure 2.

Le bloc COMP est constitué par un simple amplificateur opérationnel A2 monté en comparateur et délivrant en sortie le signal S2.

La fonction TP1 est une temporisation ordinaire réalisée par exemple par un circuit compteur logique CL1 piloté par une horloge CK, pour former le signal S3.

Le circuit de puissance pour la commande d'excitation (bloc EX) est de conception classique, avec un transistor de puissance T8 en l'espèce bipolaire. La diode de roue libre associée à l'enroulement d'excitation IND est constituée par D4.

Le circuit correspondant au bloc RFP comprend un pont diviseur résistif R18, R19 recevant la tension UB+. Les composants R20 et C4 assurent un filtrage avant que le signal divisé ne soit comparé à une référence de tension externe S1 au niveau d'un amplificateur opérationnel A3 monté en comparateur.

Le signal S4 est obtenu en sortie de l'étage construit autour de T4 et recevant le signal de sortie de A3. Le signal de référence de période VP2 est obtenu en chargeant et en déchargant le condensateur C5, la charge s'effectuant via R26 et R25 lorsque T10 est bloqué et la décharge s'effectuant via R25 et T10 lorsque T10 est passant, ce transistor T10 étant piloté par la sortie du comparateur A3.

Le caractère prioritaire du signal S4 au niveau de l'entrée du circuit de temporisation TP1 pour supprimer l'excitation est réalisé en utilisant ledit signal S4 comme signal de remise à zéro du temporisateur CL1, ce qui, après la durée de temporisation (par exemple 2 ms comme indiqué plus haut), bloque l'excitation.

Le bloc RP comprend une diode D5 et un condensateur C6 qui mémorisent la valeur de crête du signal de phase ϕ1 ou ϕ2 appliqué en entrée. En fonctionnement normal, cette valeur mémorisée est supérieure à la tension de seuil de la diode zéner DZ1, qui alors conduit en inverse. Le transistor T11 est donc passant, tandis que T12 est bloqué. Il n'y a donc aucune influence sur le fonctionnement de la régulation, car le signal S5 est en haute impédance. En revanche, si le signal de phase ϕ1 ou ϕ2 voit son amplitude baisser excessivement, la valeur mémorisée dans le condensateur C6 devient inférienre à la tension de seuil de DZ1, ce qui bloque T11 et rend T12 conducteur. Le signal S5 prend alors une valeur proche de 0 volt, ce qui force l'excitation à se rétablir via le bloc EX quel que soit l'état de son signal de commande S3.

On notera que ce rétablissement de l'excitation n'accroît pas le couple résistant appliqué par l'alternateur au moteur thermique, car la tension de crête de ϕ1 ou ϕ2 est toujours, dans cette situation, sensiblement inférieure à UB+, et l'alternateur ne débite pas.

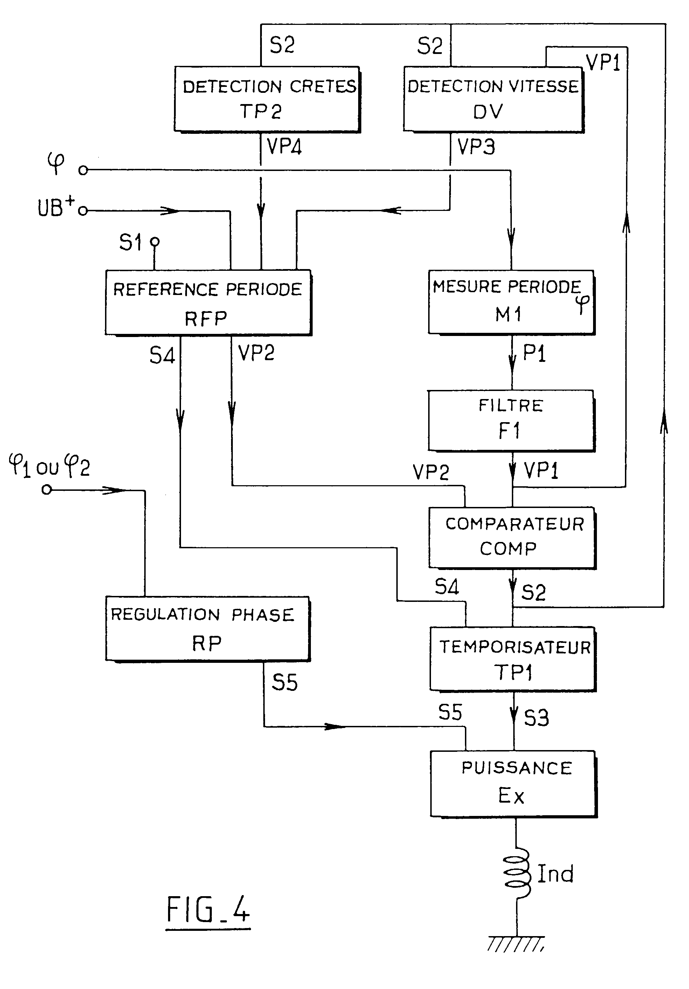

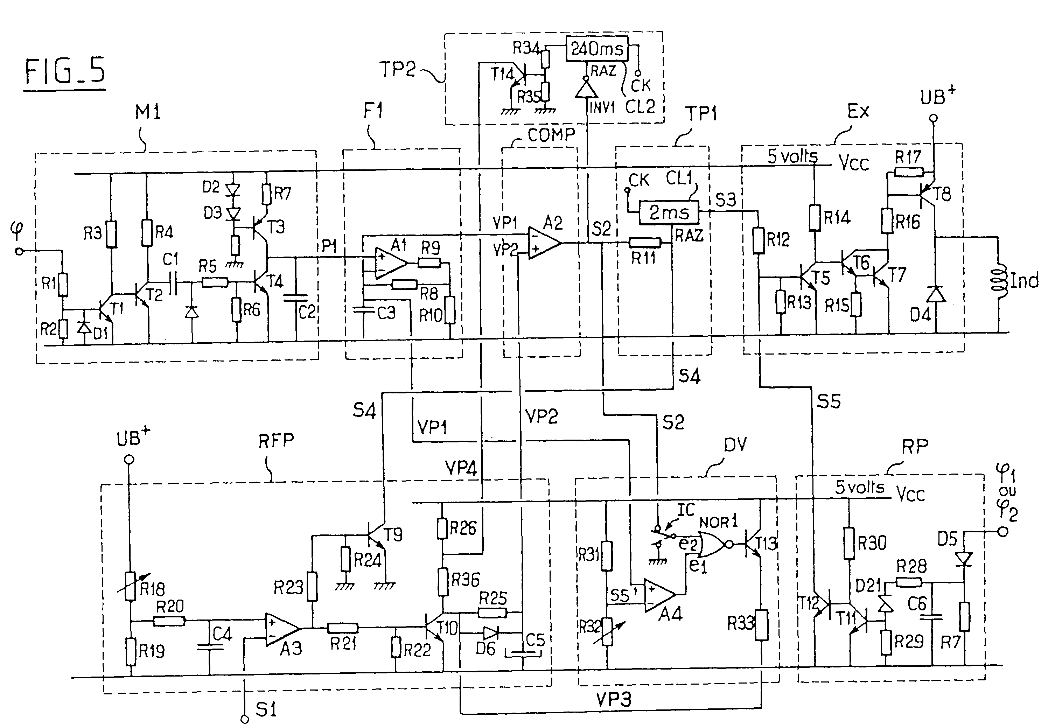

Maintenant en référence aux figures 4 et 5, on a représenté, sous forme de schéma-bloc et sous forme de schéma de circuit analogique, une variante de réalisation du dispositif des figures 1 et 3, qui est remarquable en ce qu'elle comprend en outre un dispositif de détection de crêtes, désigné par TP2, et un dispositif de détection de vitesse, noté DV.

Le bloc TP2 a pour objet de traiter la situation particulière dans laquelle l'alternateur est en régime de "plein champ", c'est-à-dire qu'à la suite d'une demande importante de courant, l'excitation est effectuée en permanence pendant une durée substantielle. Dans ce cas, les valeurs de VP1 et de VP2 divergent, du fait que la tension UB+ étant inférieure à Ureg pendant une durée prolongée, VP2 croît pendant toute cette durée.

Le signal VP2, après avoir franchi le signal VP1 vers le haut, part en butée sur une limite positive constituée par la tension d'alimentation Vcc des circuits (typiquement 5 volts) ou une tension proche de celle-ci.

Lorsque la situation de plein champ se termine, le retour à un mode de régulation par la vitesse par comparaison entre VP1 et VP2 s'effectue avec un certain retard, correspondant à la durée nécessaire pour que VP2 achève sa convergence sur VP1, et pendant cette période, c'est une régulation sur tension qui s'effectue.

Pour réduire la durée de cette période transitoire indésirable, le circuit TP2 a pour objet de limiter la croissance du signal VP2 pendant le régime de plein champ à une limite supérieure plus basse que celle déterminée par la tension d'alimentation des circuits, et en l'espèce à une valeur égale à la valeur de crête du signal VP1.

A cet effet, le bloc TP2 comprend une temporisation, par exemple d'une valeur de 240 ms et constituée par un circuit compteur logique CL2 cadencé par l'horloge CK et dont l'entrée de remise à zéro est commandée par un inverseur logique INV1 recevant en entrée le signal S2. Chaque fois que ce signal S2 est au niveau zéro, ce qui correspond au fait que le signal VP2 est inférieur au signal VP1, cette temporisation TP2 est remise à zéro, de sorte que le transistor T14 reste bloqué. Le bloc TP2 n'a donc pas d'influence sur le signal VP2, qui continue à croître. En revanche, lorsque VP2 devient supérieur à la crête positive de VP1 pendant une durée supérieure à la valeur de la temporisation TP2, alors la sortie du compteur CL2 passe au niveau logique "1" et le transistor devient conducteur et force le condensateur C5 du bloc RFP à se décharger via les résistances R25 et R36. Ainsi la valeur du signal VP2, à la temporisation près, ne peut pas dépasser la valeur de crête supérieure du signal VP1. La charge de C5 reprend alors, jusqu'à ce que la même situation se produise à nouveau.

Le bloc DV constitue un détecteur de vitesse dont l'objet est de limiter la plage de fonctionnement de la régulation par les signaux VP1 et VP2 à un domaine donné de vitesses de rotation de l'alternateur.

Cette régulation basée sur la période présente en effet tout son intérêt principalement dans le cas d'une rotation du moteur thermique au ralenti, afin de stabiliser ce régime de ralenti dans le cas où des demandes de courant important apparaissent sur le réseau de bord du véhicule, ce qui correspond par exemple à une limite supérieure de 2000 tours/minute au niveau de l'alternateur.

Ainsi, au delà d'une valeur légèrement supérieure à 2000 t/mn, et par exemple égale à 2500 t/mn, la fonction de régulation sur la période peut être progressivement supprimée.

A cet effet, le détecteur de vitesse DV comprend un amplificateur opérationnel A4 monté en comparateur, qui compare la valeur du signal VP1 à une tension de seuil S5' établie par un pont diviseur résistif R31, R32. La sortie du comparateur A4 attaque une entrée e1 d'une porte logique NON-OU désignée par NOR1, dont l'autre entrée e2 reçoit sélectivement, à l'aide d'un commutateur IC, soit le signal S2, soit une tension nulle (masse). La sortie de cette porte commande un transistor T13 élaborant un signal VP3 appliqué au bloc RFP.

Si l'entrée e2 de NOR1 est à la masse, et si le signal VP1 est inférieur au seuil S5', c'est-à-dire que la vitesse est plus haute qu'un seuil de vitesse (par exemple 2500 t/mn comme indiqué plus haut) lié à la valeur de S5', alors T13 est passant et la résistance R33, dont la valeur ohmique est relativement faible, est mise en parallèle avec R26, R36 de valeurs plus élevées, pour charger rapidement le condensateur C5 via R33 et la diode D6 aussi longtemps que T10 est bloqué. Lorsque T10 devient passant, la décharge de C5 s'effectue normalement, comme décrit plus haut, via R25 et T10.

Ainsi, au-dessus d'une vitesse de rotation d'alternateur de 2500 t/mn, la régulation par comparaison de VP1 et VP2 continue à s'effectuer, mais elle a un effet pratiquement négligeable car la valeur de VP2 est capable de croître très rapidement, c'est-à-dire d'assurer un rétablissement de l'excitation pratiquement dès que UB+ est devenue inférieure à Ureg.

On observera ici que l'entrée e2 de la porte NOR1 peut aussi, à l'aide du commutateur IC, recevoir le signal S2. On évite dans ce cas, d'une façon analogue au circuit TP2 en termes de résultat, que la résistance R33 entraîne, par le biais de la charge de C5, le signal VP2 au delà de la valeur de crête de VP1. En effet, dès que le signal S2 est à un niveau haut, indiquant que VP2 excède VP1, T13 se bloque et la charge rapide de C5 via la résistance R33 est interrompue.

Ainsi, avantageusement, le commutateur IC peut être commandé selon une logique appropriée pour que le bloc DV puisse tenir lieu à la fois de circuit de détection de vitesse et de détection de crêtes pour des vitesses supérieures en l'espèce à 2500 t/mn.

On observera ici que, même si le bloc DV est prévu, le circuit de temporisation TP1 reste utile dans un mode de régulation normal pour éviter une régulation erratique s'effectuant sur la composante alternative résiduelle de la tension de sortie redressée de l'alternateur.

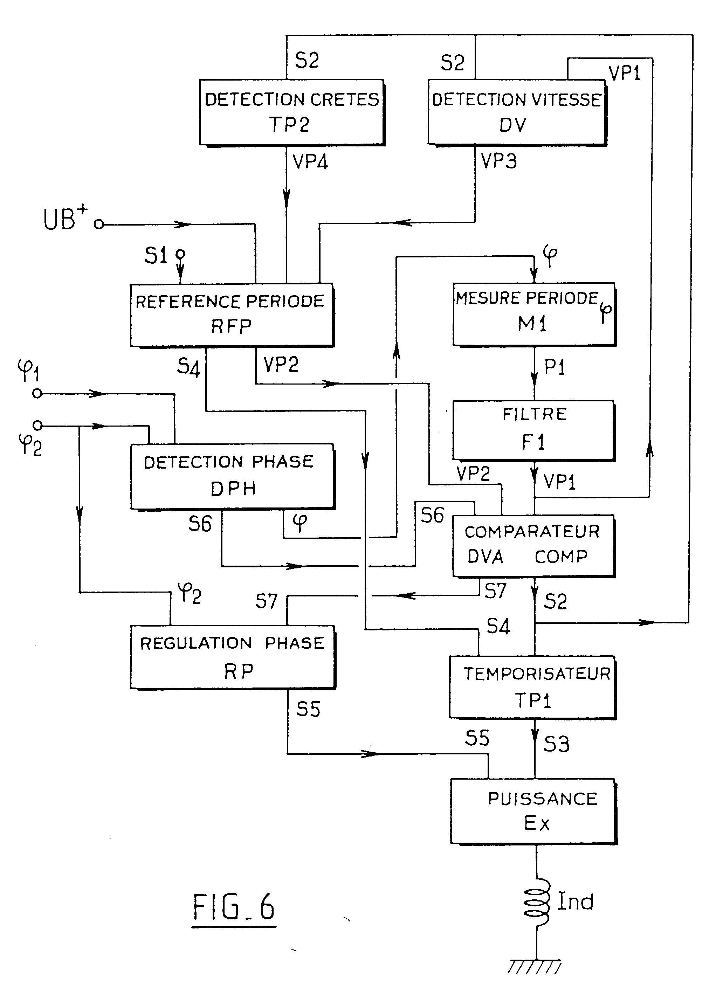

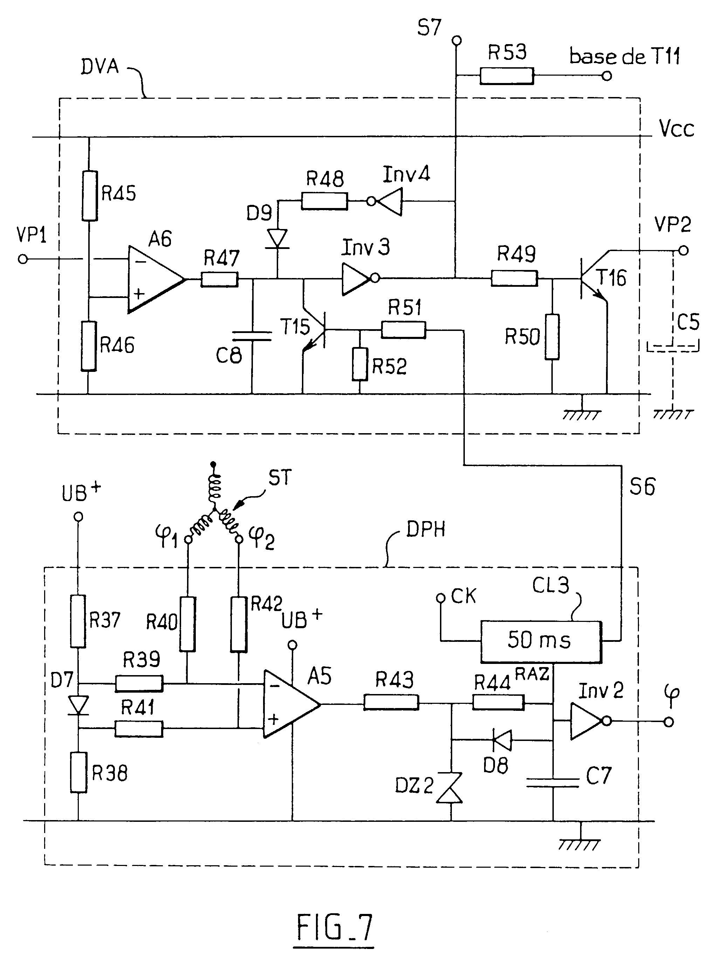

On a représenté sur la figure 6, sous forme de schéma-bloc, une autre variante de réalisation de l'invention qui, par rapport à celle des figures 4 et 5, est enrichie de deux nouvelles fonctions constituées par les blocs DVA et DPH. Un exemple de construction électronique de ces blocs est illustrée sur la figure 7.

Ces fonctions additionnelles ont pour objet essentiel de régir le fonctionnement du dispositif régulateur selon l'invention pendant la phase de démarrage du moteur thermique associé.

Ainsi le bloc DPH a pour objet de détecter le début de la rotation de l'alternateur en mesurant la différence de force électro-motrice (f.e.m.) relevée entre deux bobinages du stator ST de l'alternateur, dont les potentiels sont notés ϕ1 et ϕ2, respectivement. De préférence, le seuil de cette détection correspond à une différence d'environ 0,2 V entre les potentiels précités. Son signal de sortie, noté S6, attaque une entrée du bloc DVA. Ce dernier, qui est de préférence intégré au bloc COMP, remplit une fonction de détection de la vitesse d'amorçage de l'alternateur, par exemple d'environ 1200 t/mn. A cet effet, il reçoit sur une entrée le signal VP1, qui est comparé à une valeur de consigne. Plus précisément, le circuit DVA a pour objet de maintenir le condensateur C5 du circuit RFP, en agissant sur la ligne de signal VP2, à l'état déchargé jusqu'à ce que l'alternateur ait atteint sa vitesse de rotation d'amorçage précitée. Subsidiairement, la sortie S7 du bloc DVA attaque une entrée du bloc de régulation sur phase RP, à des fins expliquées plus loin.

On va maintenant décrire plus en détail les blocs DPH et DVA en référence à la figure 7.

Le bloc DPH comprend un amplificateur opérationnel A5 monté en comparateur, avec un jeu de résistances associées R39 à R42, ce comparateur recevant les potentiels de bobinages ϕ1 et ϕ2 sur ses deux entrées respectives. La diode D7 montée en série avec deux résistances R37 et R38 entre la tension UB+ et la masse a pour objet de fixer, par sa tension de jonction en direct, le seuil de détection de la différence de potentiel ϕ1 et ϕ2. Ainsi, si cette tension de jonction est de 0,8 volt et si le rapport entre les valeurs ohmiques de R39, R40 d'une part, et R41, R42 d'autre part, est égal à quatre, alors on obtient un seuil de détection de 0,2 volt comme précité.

Cet étage comparateur est suivi d'un filtre dissymétrique constitué par les composants R43, R44, D8 et C7. Ce filtre a pour objet, en maintenant la capacité C7 déchargée dès que la fréquence du signal en sortie de A5 présente une valeur élevée, par exemple supérieure à 20 kHz, d'éviter de prendre en compte lors de la détection les composantes de haute fréquence transitant dans les potentiels ϕ1 et ϕ2 du fait de perturbations radioélectriques (radio-téléphones, appareils "Citizen Band", émetteurs de police, de stations portuaires, etc....).

La sortie de ce filtre attaque l'entrée de remise à zéro RAZ d'une temporisation constituée par un compteur logique CL3 piloté par le signal d'horloge CK. La valeur de la temporisation est ici de 50 ms.

La diode Zéner DZ2 a pour objet quant à elle de limiter la tension délivrée par A5 à une valeur compatible avec l'entrée RAZ du circuit CL3 (typiquement 5 volts).

La temporisation CL3 délivre en sortie un signal S6 qui attaque comme on le verra ci-dessous une entrée du bloc DVA, la valeur du signal S6 étant un "1" logique (5 volts) si l'alternateur est à l'arrêt, et un "0" logique (masse) dès que l'alternateur entre en rotation.

Par ailleurs, le circuit DPH est avantageusement utilisé ici pour construire le signal ϕ décrit plus haut, dont la période est proportionnelle à la période de rotation de l'alternateur.

A cet effet, un circuit inverseur logique INV2 délivre en sortie le signal de phase ϕ à partir du signal pris sur la borne haute de C7.

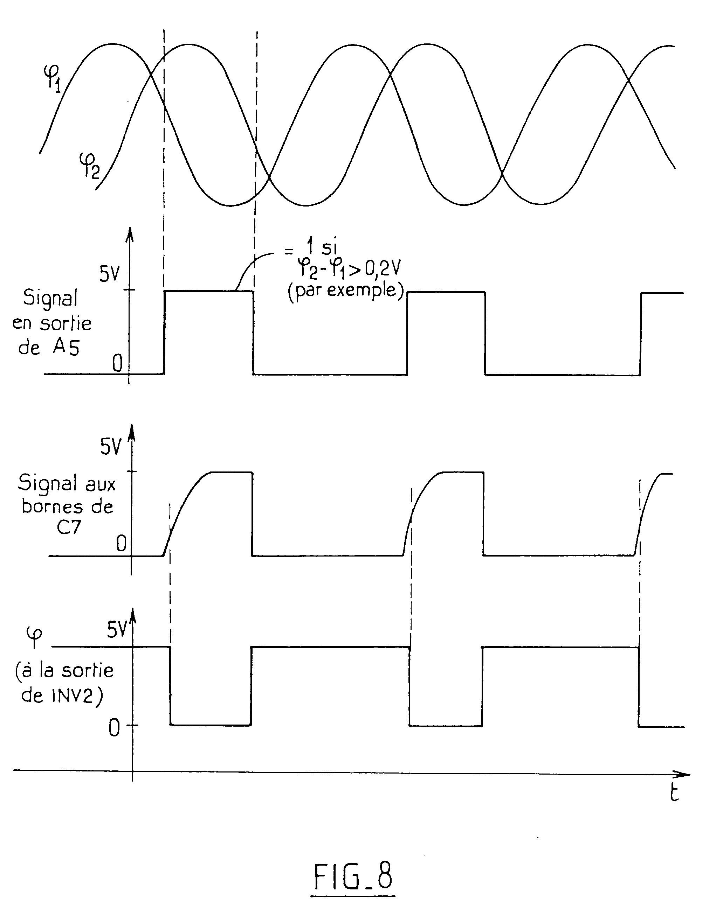

On a représenté sur la figure 8, de haut en bas, les signaux de phase ϕ1 et ϕ2, le signal en sortie du comparateur A5, le signal aux bornes du condensateur C7 (après filtrage), et enfin le signal ϕ en sortie de l'inverseur logique INV2.

Le circuit DVA comporte un amplificateur opérationnel A6 monté en comparateur, qui compare le signal de période moyenne VP1 avec une valeur de consigne fixée par le pont diviseur R45, R46 branché entre la tension d'alimentation continue Vcc et la masse. Le condensateur C8 se charge dès que ladite valeur moyenne VP1 devient inférieure à cette consigne. Le condensateur C8 est ensuite verrouillé dans son état chargé par le circuit constitué par les inverseurs logiques INV3 et INV4, la résistance R48 et la diode D9 aussi longtemps que l'alternateur reste en rotation à une vitesse au moins égale à la vitesse d'amorçage. Plus précisément, C8 ne peut se décharger que lorsque le signal S6 délivré par le bloc DPH passe au niveau logique haut, ce qui rend le transistor T15 conducteur, c'est-à-dire que lorsqu'aucune rotation de l'alternateur n'est détectée par le bloc DPH.

La charge de C8 provoque elle-même, par le jeu de l'inverseur INV3, le blocage de T16, ce qui autorise alors la charge de C5 et donc l'accroissement de la valeur du signal VP2.

Le circuit DVA permet donc d'assurer une temporisation de la montée en excitation de l'alternateur, cette temporisation se prolongeant aussi longtemps que le signal VP2 est inférieur à VP1 à partir du moment où l'alternateur a atteint son régime d'amorçage.

On observera également que le bloc de détection DVA comporte également une sortie S7 qui a pour objet d'éviter qu'une excitation permanente soit provoquée par le bloc de régulation sur phase RP en dessous du régime d'amorçage de l'alternateur, voire lorsque l'alternateur est à l'arrêt. A cet effet, le signal S7, pris en sortie de l'inverseur INV3, attaque via une résistance la base du transistor T11 du bloc RP, pour bloquer le fonctionnement de celui-ci dans ces conditions.

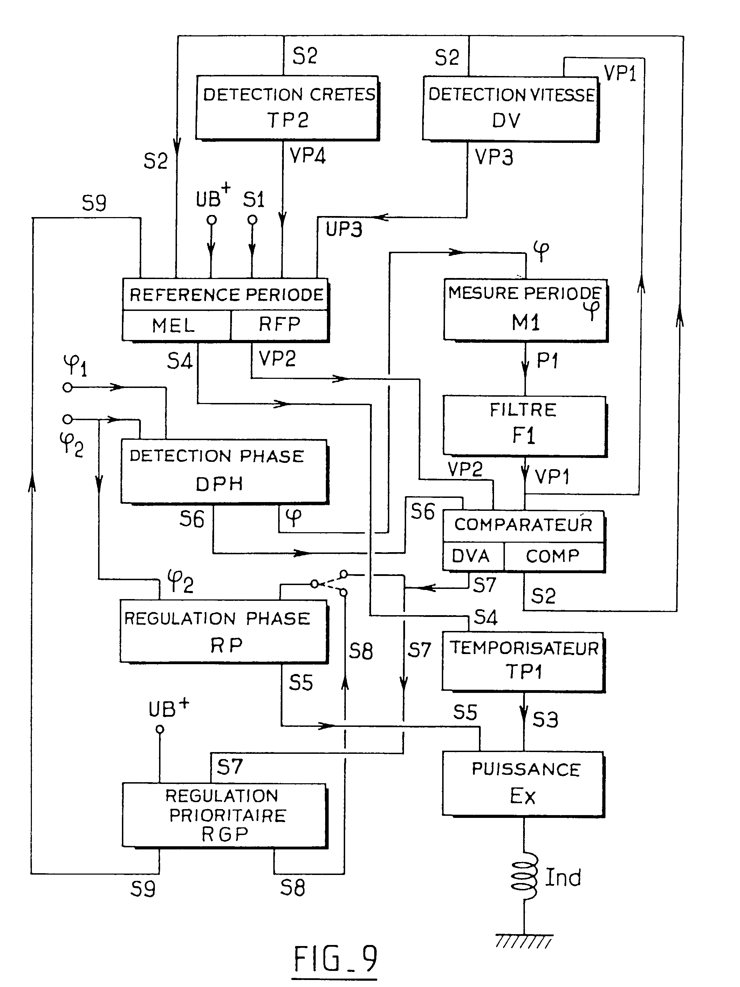

On va maintenant décrire en référence aux figures 9 à 11, une autre variante de réalisation de la présente invention. Cette variante est particulièrement destinée à assurer dans de bonnes conditions l'alimentation électrique de certains équipements du véhicule, touchant à sa sécurité (notamment système d'anti-blocage des freins, direction assistée électrique, contrôle électronique du moteur, etc...) pendant la phase de temporisation au démarrage assurée par le circuit DVA.

Plus précisément, au cours de la phase de démarrage du moteur à combustion, il peut se trouver que des consommateurs électriques de forte puissance (dégivrage, etc...) soient mis en service pendant cette temporisation. Il en résulte une baisse significative de la tension de batterie UB+, qui peut perturber le fonctionnement des équipements de sécurité précités, ce qui peut s'avérer particulièrement dangereux si le véhicule a déjà commencé à rouler.

Pour résoudre ce problème, on ajoute au circuit de régulation décrit plus haut un bloc de régulation prioritaire, noté RGP, destiné à maintenir un niveau de tension minimal sur la batterie (par exemple d'environ 9,75 volts) lorsqu'un tel niveau de tension a été dépassé au moins une fois pendant une durée supérieure ou égale à un seuil (par exemple 0,5 seconde) lors du démarrage du véhicule.

La valeur citée de 9,75 volts s'explique par le fait que de nombreux circuits électroniques entrent en action seulement lorsqu'ils ont détecté à leur borne d'alimentation une tension de batterie supérieure à cette valeur, et la tension ne doit pas redescendre au-dessous de cette valeur lorsque le véhicule roule.

Cette fonction de régulation prioritaire est destinée à entrer en action dès que le bloc DVA a détecté une rotation de l'alternateur supérieure à sa vitesse d'amorçage.

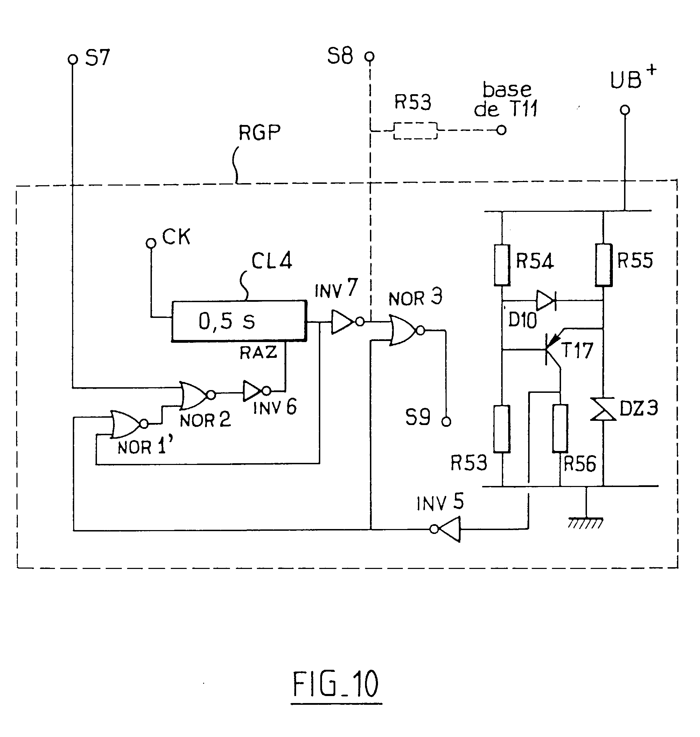

Ce circuit RGP est représenté en détail sur la figure 10.

Il comprend un étage de détection du niveau de la tension de batterie UB+ constitué par le transistor T17, les résistances R53 à R56, la diode D10 et la diode Zéner DZ3. Il comprend également une temporisation construite autour d'un compteur logique CL4, et un circuit logique constitué par un ensemble de portes NOR1', NOR2 et NOR3 (portes NON-OU) et INV5, IN6 et INV7 (inverseurs logiques), ce circuit recevant au niveau d'une entrée de la porte NOR2 le signal S7 délivré par le bloc DVA. Il est prévu également

Le transistor T17 compare la tension batterie UB+ à une tension de seuil constituée par la tension d'avalanche de la diode Zéner DZ3, et se trouve à l'état bloqué lorsque UB+ est supérieure à ladite tension d'avalanche, fixée à 9,75 volts par exemple.

Lorsque le régime de l'alternateur est inférieur à son régime d'amorçage (ici 1200 t/mn), le signal S7 est au niveau logique "1", ce qui maintient via NOR2 et INV6 la remise à zéro de la temporisation CL4 au niveau de son entrée RAZ. Dès que le régime de l'alternateur a franchi le seuil de 1200 t/mn, le signal S7 passe au niveau logique "0" et la temporisation peut se dérouler, pour autant que le transistor T17 soit bloqué, c'est-à-dire qu'un niveau logique "1" soit appliqué à l'entrée correspondante de la porte NOR1 via l'inverseur logique INV5.

Si pendant cette période UB+ redevient inférieure à 9,75 volts, T17 devient conducteur, un niveau logique "0" est appliqué à l'entrée de NOR1 et la temporisation CL4 est remise à zéro.

Mais si au contraire une telle situation n'est pas intervenue avant la fin de la temporisation, alors à cet instant la sortie du compteur CL4 bascule sur le niveau logique "1" et reste dans cet état grâce à la réaction assurée via NOR1 jusqu'au prochain arrêt du moteur.

A partir de ce moment, un signal S9 de régulation prioritaire sur 9,75 volts, élaboré via INV7 et NOR3 à partir de la sortie de la temporisation, est appliqué au bloc RFP via un circuit de mélange MEL représenté comme étant incorporé à ce dernier bloc.

Selon une variante de réalisation illustrée en tiretés sur la figure 10, on peut substituer à la commande du transistor T11 par le signal S7 délivré par le bloc DVA (comme décrit sur la figure 7), une commande de ce même transistor, via la même résistance R53, par un signal S8 pris en sortie de l'inverseur INV7, ce qui a pour effet de maintenir T11 à l'état conducteur aussi longtemps que la temporisation au niveau du circuit CL4 n'a pas fini de s'écouler.

Grâce à cette variante, la régulation sur phase (avec une amplitude de par exemple 7,5 volts) ne peut s'effectuer que lorsque la tension de batterie se maintient au-dessus de 9,75 volts. On évite donc toute charge de la batterie par le circuit de régulation sur phase avant la fin de l'écoulement de la temporisation réalisée par le circuit CL4.

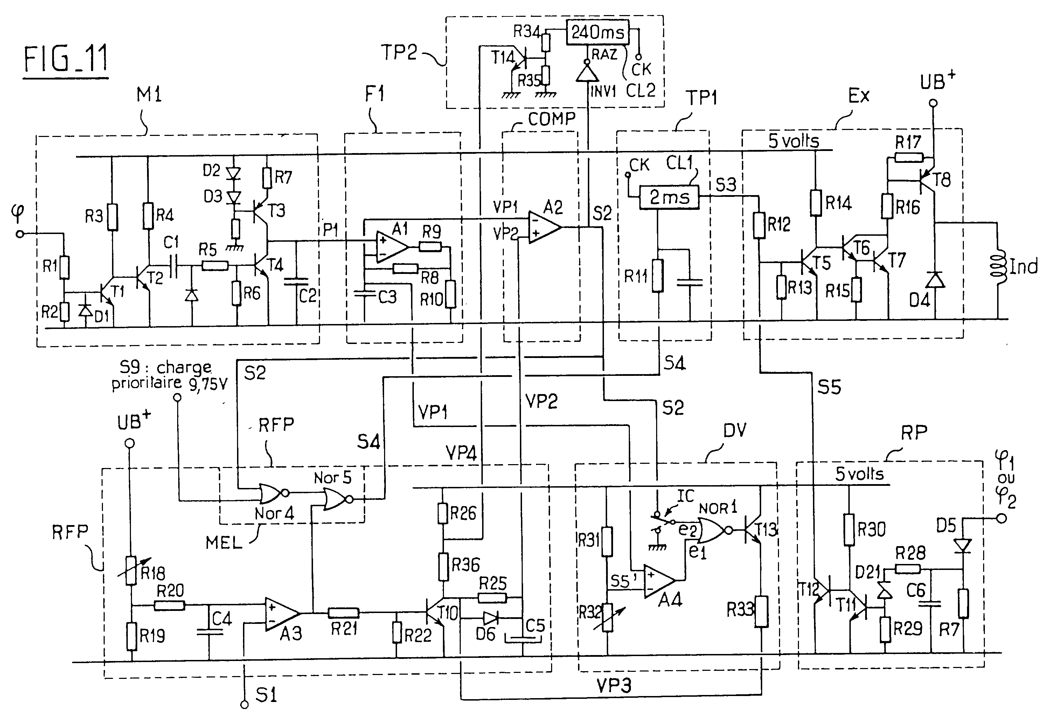

Maintenant en référence aux figures 9 et 11, dans lesquelles la figure 11 illustre une variante de réalisation de la figure 5, on va décrire en détail l'influence du signal S9 sur le fonctionnement du circuit régulateur.

Comme indiqué plus haut et illustré sur ces figures, au circuit de référence de période RFP est associé un circuit de mélange MEL qui remplace le transistor T9 qui sur la figure 5 était associé au circuit RFP. Ce circuit MEL est constitué par deux portes NON-OU désignées par NOR4 et NOR5.

Ce circuit mélangeur combine :
- le signal représentatif de la position de la valeur de UB+ par rapport au seuil S1, prise en sortie du comparateur A3;
- le signal S2, résultat de la comparaison entre les signaux VP1 et VP2 faite au niveau du comparateur A2; et
- le signal S9 de régulation prioritaire à 9,75 volts, pris sur la sortie de la porte NOR3.

On notera en particulier que le signal S2 passe par le mélangeur MEL alors qu'il était, sur la figure 5, relié directement à l'entrée de remise à zéro RAZ du circuit de temporisation TP1.

Le circuit mélangeur MEL fonctionne de la façon suivante :
- si UB+ > Ureg, la sortie de A3 est au niveau logique "1", et la sortie de NOR5 est donc à "0", cette valeur étant appliquée à l'entrée de remise à zéro de la temporisation TP1 (compteur logique CL1); en conséquence, cette temporisation se déroule et le signal d'excitation est supprimé après celle-ci (dans l'exemple, 2 ms).
- si au contraire UB+ < Ureg, la sortie de A3 est au niveau "0" et les portes NOR4 et NOR5 transmettent soit le signal d'excitation issu de la comparaison entre VP1 et VP2 par le comparateur A2, soir le signal S9 de régulation prioritaire à 9,75 volts.

On observera pour terminer que, dans le schéma-bloc de la figure 9, la régulation sur phase réalisée dans le bloc RP peut être mise en service, au choix, soit directement par le circuit de détection d'amorçage DVA, via le signal S7, soit par le circuit de régulation prioritaire RGP, via le signal S8.

Bien entendu, la présente invention n'est nullement limitée aux formes de réalisation décrites ci-dessus et représentées sur les dessins, mais l'homme de l'art saura y apporter toute variante ou modification conforme à son esprit.

En particulier, les différents circuits décrits ci-dessus et réalisés en technologie mixte analogique/logique, peuvent avantageusement être réalisés en technologie numérique, l'homme du métier pouvant effectuer sans difficulté les transpositions nécessaires et en particulier:
- le remplacement des condensateurs par des compteurs-décompteurs numériques, une incrémentation correspondant à une charge et une décrémentation à une décharge;
- le remplacement des comparateurs analogiques par des comparateurs numériques.

A cet égard, le terme "signal" utilisé dans tout le présent mémoire pourra signifier selon les cas, une tension analogique, une valeur logique "0" ou "1" ou encore un mot numérique de N bits, N étant choisi notamment en fonction de la précision de traitement requise.

## Revendications

1. Dispositif régulateur de la tension de charge d'une batterie par un alternateur, notamment dans un véhicule automobile, du type comprenant :
- des premiers moyens comparateurs (RFP, A3) pour comparer la tension aux bornes de la batterie (UB+) à une tension de régulation (S1, Ureg), et
- des moyens (M1, F1) pour engendrer un signal (VP1) représentatif de la vitesse de rotation de l'alternateur et des seconds moyens comparateurs (COMP, A2) pour comparer ledit signal avec un signal variable de référence (VP2), dispositif caractérisé en ce que :
- les premiers moyens comparateurs (RFP, A3) sont aptes à supprimer l'excitation de l'alternateur lorsque la tension aux bornes de la batterie (UB+) est supérieure à ladite tension de régulation (S1, Ureg), et
- les seconds moyens comparateurs (COMP, A2) sont aptes à sélectivement établir et supprimer l'excitation de l'alternateur en fonction de la comparaison entre ledit signal (VP1) représentatif de la vitesse de rotation et ledit signal variable de référence (VP2) lorsque la tension aux bornes de la batterie est inférieure à ladite tension de régulation.

2. Dispositif selon la revendication 1, caractérisé en ce qu'il comprend des moyens (RFP, T10, C5) pour établir ledit signal variable de référence (VP2) en fonction du résultat de la comparaison par les premiers moyens comparateurs (A3).

3. Dispositif selon la revendication 2, caractérisé en ce que ledit signal variable de référence (VP2) est un signal représentatif d'une valeur de référence de période de rotation de l'alternateur, et en ce que les moyens (RFP, T10, C5) pour établir ledit signal de référence de période comprennent des moyens pour engendrer un signal qui décroît si la tension aux bornes de la batterie (UB+) est supérieure à ladite tension de régulation (S1, Ureg) et qui croît si la tension aux bornes de la batterie est inférieure à ladite tension de régulation.

4. Dispositif selon la revendication 3, caractérisé en ce que la vitesse de croissance dudit signal de référence de période (VP2) est plus faible que sa vitesse de décroissance.

5. Dispositif selon l'une des revendications 1 à 4, caractérisé en ce que ledit signal (VP1) représentatif de la vitesse de rotation de l'alternateur est obtenu à partir d'un signal en dents de scie (P1), la largeur desdites dents étant proportionnelle à la période de rotation de l'alternateur, et en ce qu'il comprend en outre un premier moyen de filtrage (F1) du signal en dents de scie avec un taux de filtrage tel qu'il y subsiste une composante alternative, la comparaison du signal filtré (VP1) avec ledit signal variable de référence (VP2) provoquant un hachage à fréquence élevée du signal d'excitation de l'alternateur.

6. Dispositif selon l'une des revendications 1 à 5, caractérisé en ce qu'il comprend en outre un premier moyen de temporisation (TP1) prévu en aval des seconds moyens comparateurs, destinés à limiter la fréquence dudit signal d'excitation.

7. Dispositif selon l'une des revendications 1 à 6, caractérisé en ce qu'il comprend en outre des troisièmes moyens comparateurs (RP, C6, DZ1, T11, T12) destinés à comparer un signal de phase (ϕ1; ϕ2) pris sur un bobinage de stator de l'alternateur avec une tension de référence (DZ1) et à forcer l'excitation de l'alternateur à s'établir prioritairement lorsque ledit signal de phase est inférieur à ladite tension de référence.

8. Dispositif selon la revendication 5, caractérisé en ce qu'il comprend en outre des moyens (TP2) pour limiter la valeur dudit signal variable de référence (VP2) à une valeur n'excédant pas la valeur de crête dudit signal filtré (VP1).

9. Dispositif selon la revendication 8, caractérisé en ce que lesdits moyens de limitation comprennent un second moyen de temporisation (TP2) prévu entre les seconds moyens comparateurs (COMP, A2) et des moyens (RFP) pour établir ledit signal variable de référence (VP2).

10. Dispositif selon la revendication 9 rattachée à la revendication 3, caractérisé en ce que le second moyen de temporisation (TP2) est apte à appliquer auxdits moyens (RFP, T10, C5) d'établissement du signal de référence de période (VP2) un signal (VP4) qui bloque la croissance de ce signal.

11. Dispositif selon l'une des revendications 1 à 10, caractérisé en ce qu'il comprend en outre des quatrièmes moyens comparateurs (DV, A4) pour comparer la vitesse de rotation de l'alternateur à une vitesse limite et pour au moins atténuer la fonction des seconds moyens comparateurs (COMP, A2) lorsque ladite vitesse limite est dépassée.

12. Dispositif selon la revendication 11, rattachée à la revendication 5, caractérisé en ce que les quatrièmes moyens comparateurs (DV, A4) reçoivent ledit signal filtré (VP1) et délivrent un signal de sortie (VP3) à des moyens (RFP) pour établir ledit signal variable de référence (VP2) de manière à modifier l'évolution de celui-ci.

13. Dispositif selon la revendication 12, rattachée à la revendication 3, caractérisé en ce que ledit signal de sortie (VP3) des quatrièmes moyens comparateurs (DV, A4) provoque une augmentation de la vitesse de croissance du signal de référence de période (VP2).

14. Dispositif selon la revendication 13, caractérisé en ce qu'il comprend en outre des cinquièmes moyens comparateurs (DPH, A5) recevant en entrée des signaux de phase (ϕ1, ϕ2) pris sur des bobinages de stator (ST) de l'alternateur, pour détecter l'entrée en rotation de l'alternateur lorsque l'amplitude d'un signal combinant ces signaux de phase dépasse une valeur de seuil donnée.

15. Dispositif selon la revendication 14, caractérisé en ce qu'il est prévu en association avec les cinquièmes moyens comparateurs (A5) un second moyen de filtrage (R44, C7, DZ2).

16. Dispositif selon l'une des revendications 14 et 15, caractérisé en ce que lesdits cinquièmes moyens comparateurs (DPH, A5) sont utilisés pour établir un signal (ϕ) à partir duquel ledit signal représentatif de la vitesse de rotation de l'alternateur est établi.

17. Dispositif selon l'une des revendications 1 à 16, caractérisé en ce qu'il comprend en outre des sixièmes moyens comparateurs (DVA, A6) pour comparer ledit signal (VP1) représentatif de la vitesse de rotation de l'alternateur avec une valeur de seuil, de manière à retarder l'excitation de l'alternateur jusqu'à l'instant auquel une vitesse d'amorçage de l'alternateur a été atteinte.

18. Dispositif selon la revendication 17, rattachée à la revendication 3, caractérisé en ce que les sixièmes moyens comparateurs (DVA, A6) engendrent un signal de sortie apte à interdire la croissance du signal de référence de période avant que la vitesse d'amorçage n'ait été atteinte.

19. Dispositif selon la revendication 17 ou 18, rattachée à la revendication 7, caractérisé en ce que les sixièmes moyens comparateurs (DVA, A6) appliquent un signal (S7) auxdits troisièmes moyens comparateurs (RP, C6, DZ1, T11, T12) pour neutraliser l'action de ces derniers aussi longtemps que la vitesse d'amorçage n'a pas été atteinte.

20. Dispositif selon l'une des revendications 17 à 19, caractérisé en ce qu'il comprend en outre des septièmes moyens comparateurs (RGP, DZ3, T17) destinés à comparer la tension aux bornes de la batterie avec une valeur de sécurité et à assurer une excitation prioritaire de l'alternateur dès que ladite tension aux bornes de la batterie devient inférieure à ladite valeur de sécurité, à la condition que la vitesse de rotation de l'alternateur soit supérieure à sa vitesse d'amorçage.
